# EUROPÄISCHE PATENTSCHRIFT

(11) **EP 3 474 709 B1**
(45) Veröffentlichungstag und Bekanntmachung des Hinweises auf die Patenterteilung: **20.01.2021**
(21) Anmeldenummer: 17768345.5
(22) Anmeldetag: 21.06.2017
(51) Int. Cl.: A47J 31/06, A47J 31/20, A47J 41/00

(54) **VERSCHLUSSAUFSATZ FÜR KANNEN UND FLASCHEN FÜR HEISS- UND KALTGETRÄNKE**
CLOSURE CAP FOR CANS AND BOTTLES FOR HOT AND COLD DRINKS
EMBOUT DE FERMETURE POUR CANETTES ET BOUTEILLES DE BOISSONS CHAUDES ET FROIDES

(30) Priorität: 22.06.2016 DE 202016103314 U
(43) Veröffentlichungstag der Anmeldung: 01.05.2019
(73) Patentinhaber: Emsa GmbH, 48282 Emsdetten (DE)
(72) Erfinder: STEER, Annelen, 49492 Westerkappeln (DE)
(74) Vertreter: SEB Développement
(86) Internationale Anmeldenummer: PCT/DE2017/100526
(87) Internationale Veröffentlichungsnummer: WO 2017/220080

(56) Entgegenhaltungen:
- WO-A1-2012/006787
- CN-Y- 2 933 177
- DE-A1- 19 839 421
- US-A1- 2014 242 240

## Beschreibung

Die Erfindung betrifft einen Verschlussaufsatz für Kannen und Flaschen für Heiß- und Kaltgetränke mit den Merkmalen des Oberbegriffs des Anspruchs 1.

Isolierkannen und Isolierflaschen sind in vielfältiger Weise bekannt. Ebenso sind dazu passende Verschlusseinheiten bekannt, die zum Beispiel aufgeschraubt werden können und bei denen über einen Tastendruck eine Ausgießöffnung verschlossen oder freigegeben werden kann. Hierzu werden insbesondere die von Kugelschreibern bekannten Druck-Rast-Einheiten verwendet, bei denen mit jedem Tastendruck abwechselnd eine angehobene oder abgesenkte Stellung eines Dichtelements bewirkt werden kann. Solche Verschlussaufsätze sind insbesondere für mobil mitgeführte Trinkflaschen geeignet, bei denen das in der Flasche enthaltenen Getränk direkt über den Aufsatz konsumiert werden kann. Mit einem Tastendruck öffnet der Benutzer den Verschluss, wobei insbesondere ein plattenförmiges Dichtelement von seinem Dichtsitz abgehoben wird. Mit einem weiteren Druck auf die Betätigungstaste wird das Dichtelement wieder an seinen Dichtsitz angelegt. Das Grundgehäuse ist dabei dicht mit dem Hals der Kanne oder Flasche verbunden, so dass bei einem geschlossenen Verschluss keine Flüssigkeit aus dem Inneren der Kanne oder Flasche auslaufen kann.

Trotz aller Vorteile der bekannten Verschlussaufsätze bleiben Schwierigkeiten für die Benutzer, die kein fertiges Heiß- oder Kaltgetränk mitführen möchten, sondern es erst frisch zubereiten möchten, beispielsweise einen Tee aufbrühen möchten. Der Verschlussaufsatz muss beispielweise zur Herstellung eines Teegetränks abgenommen werden, um entweder ein mit Teeblättern gefülltes Tee-Ei oder einen Teebeutel durch den Hals in den Aufnahmeraum der Kanne oder Flasche abzusenken, wo heißes Wasser aufbewahrt wird. Nach der vorgesehenen Brühzeit muss dann der Teebeutel oder das Tee-Ei wieder entnommen werden und der Aufsatz muss wieder aufgeschraubt werden. Während der Brühzeit entsteht ein erheblicher Wärmeverlust durch Verdampfung durch den offenen Flaschenhals. Außerdem muss der Benutzer ein geeignetes Gefäß oder einen Beutel mitnehmen, um das benutze Tee-Ei bzw. den benutzten Teebeutel transportieren zu können, soweit keine unmittelbare Entsorgung vor Ort möglich ist. Der Verbleib des Teebeutels oder des Tee-Eis im Inneren der geschlossenen Kanne oder Flasche ist nicht wünschenswert, da gerade schwarzer Tee, aber auch andere Teesorten, bei zu langer Brühzeit Bitterstoffe absondern.

US 2014/242240 A1, WO 2012/006787 A1, DE 198 39 421 A1 und CN 2 933 177 Y beschreiben Systeme für die Zubereitung von Tee und anderen Getränken.

Die Aufgabe der vorliegenden Erfindung besteht somit darin, einen Verschlussaufsatz für eine Kanne oder Flasche für Heiß- und Kaltgetränke anzugeben, mit dem auch bei mobiler Verwendung eine einfache Teezubereitung möglich ist.

Diese Aufgabe wird durch einen Verschlussaufsatz mit den Merkmalen des Anspruchs 1 gelöst.

Erfindungsgemäß wird in dem Verschlussaufsatz ein Teesiebeinsatz bereitgehalten, der so weit nach unten absenkbar ist, dass er in einen Flüssigkeitsspiegel in einer Kanne oder Flasche eintaucht, auf welche der Verschlussaufsatz aufgeschraubt ist. Das Absenken oder Anheben des Teesiebeinsatzes erfolgt rein von der Außenseite her, so dass der Verschlussaufsatz nicht abgenommen werden muss. Zur Betätigung ist ein von außen zugängliches Bedienelement vorgesehen, beispielsweise ein Knauf, der auf der Oberseite einer Betätigungstaste angeordnet ist und der über eine Achse, welche durch die Verschlusseinheit hindurchgeführt ist, mit dem Dichtelement verbunden ist.

Zum normalen Öffnen und Schließen wird die Drucktaste und/oder der Knauf herabgedrückt, so dass das Dichtelement von seinem Dichtsitz abgehoben wird und eine Fließverbindung zwischen der zum Behälter weisenden Unterseite und der Oberseite des Grundgehäuses, welche möglicherweise einen Trinkstutzen oder einen hochgezogenen Trinkrand enthält, geöffnet ist. Wird der Knauf nur gedreht, so wird der in dem Teesiebaufnahmeelement gelagerte Teesiebeinsatz über das Bewegungsgewinde gleichzeitig rotiert und axial abgesenkt. Das mit Durchbrechungen versehene Teesieb wird während der Brühzeit getaucht in der Flüssigkeit gehalten und wird nach Ablauf der Brühzeit durch erneutes Drehen an dem Knauf wieder in seine Ausgangsposition, welche oberhalb des Flüssigkeitsspiegels liegt, zurückgeführt.

Soweit im Zusammenhang mit der Beschreibung des erfindungsgemäßen Verschlussaufsatzes beispielhaft auf die Teezubereitung Bezug genommen wird, sei darauf hingewiesen, dass dies zwar die bevorzugte Form der Anwendung darstellt, dass aber auch andere Substanzen zur Getränkezubereitung in dem Teesiebeinsatz bereitgehalten werden können, um dann in Kontakt mit Wasser oder einer anderen trinkbaren Flüssigkeit wie beispielsweise Milch gebracht zu werden und ein Instant- oder Mixgetränk zu bilden.

Bezüglich der Möglichkeit der Teezubereitung ist der Verschlussaufsatz vorzugsweise durch einen Teesiebeinsatz mit einer entsprechenden Filterfeinheit seiner Öffnungen dafür geeignet, lose Teeblätter oder ein körniges oder pulverförmiges Instantpulver aufzunehmen. Auch ein Teebeutel kann eingelegt werden. Denkbar ist hinsichtlich der Verwendung von Teebeuteln auch, einen Teesiebeinsatz mit größeren Öffnungen vorzusehen, beispielsweise mit einer Gitterstruktur.

Die vorstehend beschriebene Grundform der Erfindung sieht keine besondere Umhüllung des Teesiebeinsatzes vor und kann bei allen Kannen und Flaschen verwendet werden, bei denen der Flüssigkeitsspiegel zumindest während der Brühzeit nicht verändert wird. Damit kommt die Flüssigkeit mit dem Teesieb nur noch beim Ausgießen kurz in Kontakt, wenn zu diesem Zeitpunkt der Teesiebeinsatz noch nicht entnommen worden ist.

Der erfindungsgemäße Verschlussaufsatz ist zum einen auch mobil einsetzbar, und verhindert zum anderen ein Nachtropfen von Restflüssigkeit aus dem Teesiebeinsatz heraus. Hierzu ist der Teesiebeinsatz in einem am Umfang vollständig geschlossenen Bereich des Grundgehäuses aufgenommen, nämlich in einem Rohrstutzen, der sich von der Unterseite des Gehäuses aus nach unten erstreckt. Der Teesiebeinsatz besitzt im Bodenbereich einen Dichtring, so dass darüber eine Abdichtung gegenüber dem Rohrstutzen möglich ist.

Weiterhin ist das Dichtelement, das zum Verschluss der Ausgießöffnung vorgesehen ist, mit einem weiteren Dichtring oder einer Dichtlippe am Umfang versehen, so dass auch im oberen Bereich des Teesiebeinsatzes eine Abdichtung gegenüber dem Rohrstutzen erreicht werden kann. Solange der Teesiebeinsatz sich also in seiner oberen axialen Position innerhalb des Rohrstutzens befindet, liegen alle mit Öffnungen versehenen Bereiche des Teesiebeinsatzes vollständig abgedichtet innerhalb des Rohrstutzens, so dass kein Nachtropfen aus dem Teesieb in das Innere einer Kanne oder Flasche möglich ist. Notwendig ist lediglich ein geringer axialer Hub, damit die obere Dichtungsebene am Teesiebeinsatzelement soweit abgesenkt werden kann, dass eine oder mehrere Durchlauföffnungen im Rohrstutzen freigegeben werden können und ein Ausgießen von Flüssigkeit an dem Rohrstutzen und dem Teesiebeinsatz vorbei möglich ist. Damit wird ein Durchfluss von Flüssigkeit von der Außenseite des Rohrstutzens her durch die Durchlauföffnungen im Rohrstutzen bis in die Auslauföffnung im Grundgehäuse möglich.

Wird die gesamte Einheit wieder angehoben, werden zum einen die Durchlauföffnungen am Umfang des Rohrstutzens verschlossen und zum anderen legt sich das Auslaufdichtelement vor die Auslauföffnung. Somit wird nicht nur ein Auslaufen von Flüssigkeit aus dem Inneren des Behälters verhindert, sondern es wird auch ein Verschluss der Fließwege zur Außenseite hergestellt, um das Eindringen von Schmutz zu verhindern.

Vorzugsweise ist die Verschlusseinheit als eine an sich bekannte Druck-Rast-Einheit ausgebildet, um mit jedem Tastendruck abwechselnd das Dichtelement und das damit verbundene Teesiebeinsatzelement anzuheben und zu senken. Die Betätigung für die axiale Bewegung kann über eine Drucktaste erfolgen. Die Rotation des Teesiebeinsatzelementes, mit der der Teesiebeinsatz aus dem Rohrstutzen herausgeschoben und in die in der Kanne oder Flasche enthaltene Flüssigkeit abgesenkt werden kann, erfolgt vorzugsweise über eine Achse, die auf der Mittelachse des Verschlussaufsatzes angeordnet ist und die von dem Auslaufdichtelement aus durch die Verschlusseinheit und die Drucktaste hindurch nach außen läuft.

Die Erfindung wird nachfolgend mit Bezug auf die Zeichnung näher erläutert. Die Figuren zeigen im Einzelnen:
- Fig. 1: eine perspektivische Ansicht eines Verschlussaufsatzes mit einer Trinkflasche von außen;
- Fig. 2: den Verschlussaufsatz in perspektivischer Ansicht von unten;
- Fig. 3: den Verschlussaufsatz mit Trinkflasche in Verschlussstellung im Querschnitt;
- Fig. 4: den Verschlussaufsatz in Gebrauchsstellung im Querschnitt;

- Fig. 5: den Verschlussaufsatz in teilweise geschnittener, perspektivischer Ansicht in Brühstellung und
- Fig. 6: den Verschlussaufsatz in Brühstellung in vollständig geschnittener Ansicht.

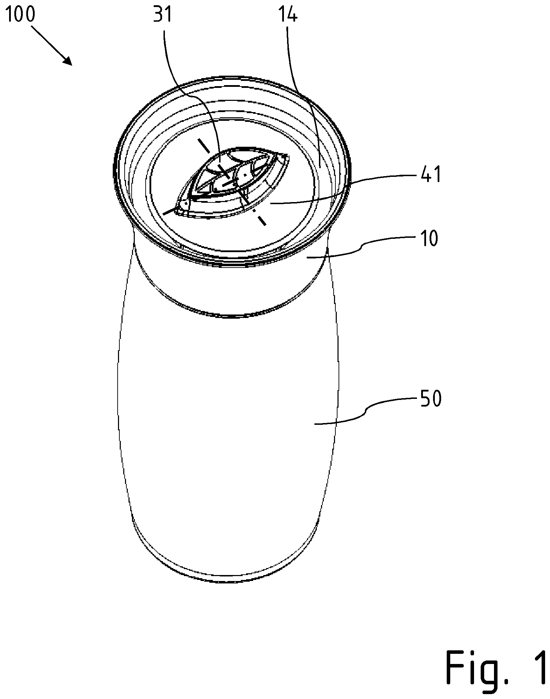

Fig.1 zeigt eine Trinkflasche 50 mit einem Verschlussaufsatz 100 in perspektivischer Ansicht. Sichtbar ist der aus der Trinkflasche 50 herausragende Teil eines Grundgehäuses 10. Das Grundgehäuse 10 erweitert sich trichterförmig nach oben. Ein Ausgießerrand bzw. eine Trinklippe erstreckt sich vollständig um den Innenraum des Grundgehäuses 10 herum. Im Innenraum ist eine Drucktaste 41 angeordnet, auf der wiederum ein drehbarer Knauf 31 angeordnet ist. Die Drucktaste 41 ist im Verhältnis zum Innenraum sehr groß ausgebildet, so dass zwischen dem Außenrand der Drucktaste 41 und der Trinklippe ein schmaler Ausgießerspalt 14 verbleibt. Durch die Reduzierung der Breite des Ausgießerspaltes wird ein schwallartiges Auslaufen von Flüssigkeit vermieden.

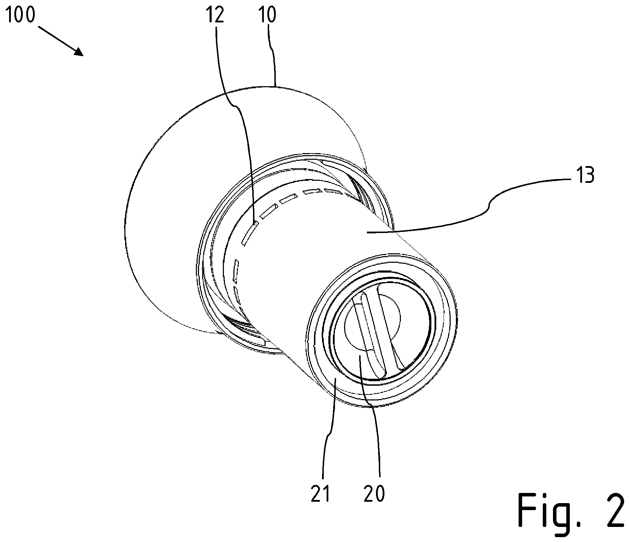

In Fig. 2 ist der von der Trinkflasche 50 abgenommene Verschlussaufsatz 100 allein dargestellt, und zwar in einer perspektivischen Ansicht von unten. Gemäß der bevorzugten Ausführungsform der vorliegenden Erfindung setzt sich das Grundgehäuse 10 nach unten in einem Rohrstutzen 13 fort, dessen Durchmesser so gewählt ist, dass er problemlos durch den Hals der Trinkflasche 50 hindurchgesteckt werden kann. Im oberen Bereich ist die zylindrische Wandung des Rohrstutzens 13 mit einer Kette von Durchlauföffnungen 12 versehen. Im Bereich oberhalb der Durchlauföffnungen 12 befinden sich Gewindeaufnahmen und Dichtringe zur dichten Verbindung mit dem Hals der Trinkflasche 50. Der Rohrstutzen 13 ist nach unten hin offen. Darin eingesetzt ist ein Teesiebeinsatz 20, der im Bodenbereich einen Dichtring 21 aufweist, so dass der gesamte Querschnitt des Rohrstutzens 13 abgedichtet wird.

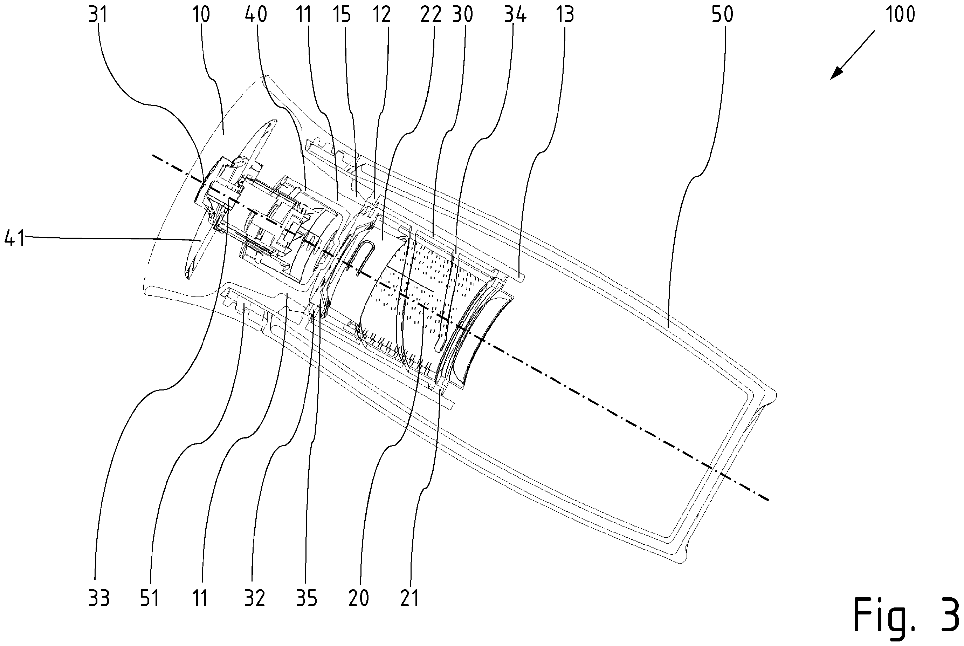

In Fig. 3 ist der in die doppelwandige Trinkflasche 50 eingesetzte Verschlussaufsatz 100 im Schnitt dargestellt. Im oberen Bereich des Grundgehäuses 10 ist eine Verschlusseinheit 40 angeordnet, auf deren Oberseite die Drucktaste 41 angeordnet ist. Der Knauf 31 ist mit einer unrunden Achse 33 gekoppelt, welche durch die Verschlusseinheit 40 hindurch zu einem Auslaufdichtelement 35 führt. Das Auslaufdichtelement 35 besitzt an seinem Außenumfang einen Dichtring 32, der in der in Fig. 3 gezeigten Verschlussstellung eine Abdichtung zu einem Steg 15 unterhalb der Auslauföffnungen 11 herstellt und der eine nach außen weisende Dichtlippe zur Anlage an die innere Wandung des Rohrstutzens 13 besitzt. Der Teesiebeinsatz 20 ist vollständig innerhalb des Rohrstutzens 13 aufgenommen und ist im Bodenbereich über das Dichtelement 21 abgedichtet. Innerhalb des Rohrstutzens 13 befindet sich ein Teesiebeinsatzelement 30, das zylindrisch ausgebildet ist und das in seiner zylindrischen Wandung einen spiralförmigen Einschnitt besitzt, der als Bewegungsgewinde 34 dient. Das Teesiebeinsatzelement 30 ist mit dem Auslaufdichtelement 35 verbunden.

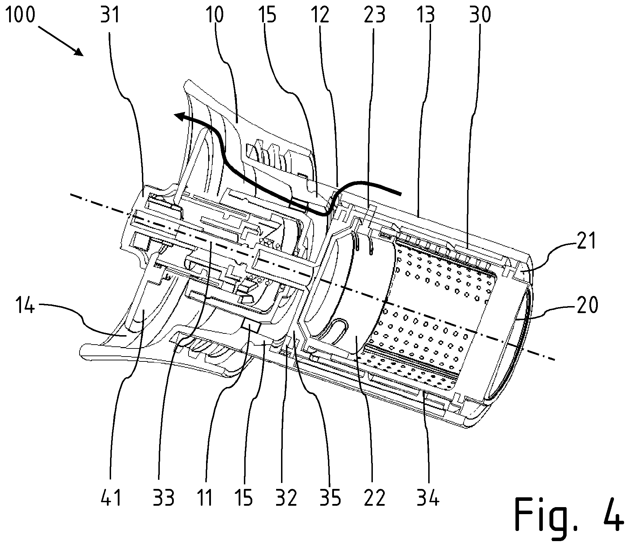

Fig. 4 zeigt in einer ähnlichen Schnittdarstellung wie in Fig. 3 den Verschlussaufsatz 100 allein, und zwar in der Gebrauchsstellung zum Trinken. Der Teesiebeinsatz 20 ist, wie oben beschrieben, vollständig im Rohrstutzen 13 aufgenommen und dichtet über das Dichtelement 21 im Bodenbereich zum Rohrstutzen 13 ab. Zugleich ist eine radial nach außenstehende Dichtlippe am Dichtring 32 ebenfalls an die innere Wandung des Rohrstutzens 13 angelegt. Der Bereich zwischen den Dichtelementen 21, 32 ist somit vollständig flüssigkeitsdicht abgeschlossen. Dazwischen befindliche Getränkereste können nicht mehr in die Kanne oder Flasche gelangen und auch nicht zum Auslauf.

Die Auslauföffnungen 11 sind jedoch in der in Fig. 4 gezeigten Stellung freigegeben, so dass sich der durch die dicke Pfeillinie angedeutete Fließweg ergibt. Dieser führt von der Außenseite des Rohrstutzens 13 durch die Durchlauföffnungen 12 in den Bereich oberhalb des Auslaufdichtelements 35 und unterhalb des Stegs 15, von dort seitlich in die Auslauföffnungen 11 und schließlich durch den Spalt zwischen Drucktaste 41 und dem Ausgießerrand nach außen.

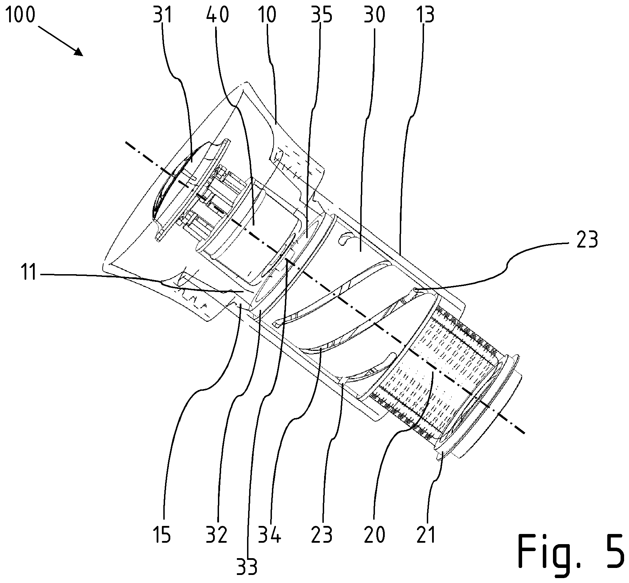

In Fig. 5 ist dargestellt, wie der Teesiebeinsatz 20 nach unten abgesenkt worden ist, nachdem das Teesiebeinsatzelement 30 rotiert worden ist. Ein Oberteil des Teesiebeinsatzes 20 besitzt radial nach außen vorstehende Stifte 23, mit denen der Eingriff in das als Schlitz ausgebildete Bewegungsgewinde 34 erfolgt. Gleichzeitig mit der axialen Verschiebung ist das Dichtelement 21 an der Unterseite des Teesiebeinsatzes 20 vollständig aus dem Rohrstutzen 13 herausgefahren. Die im Inneren einer Kanne oder Flasche vorhandene Flüssigkeit, wie insbesondere heißes Wasser, kann nun ungehindert durch die Durchbrechungen im Teesiebeinsatz 20 in dessen Inneres gelangen.

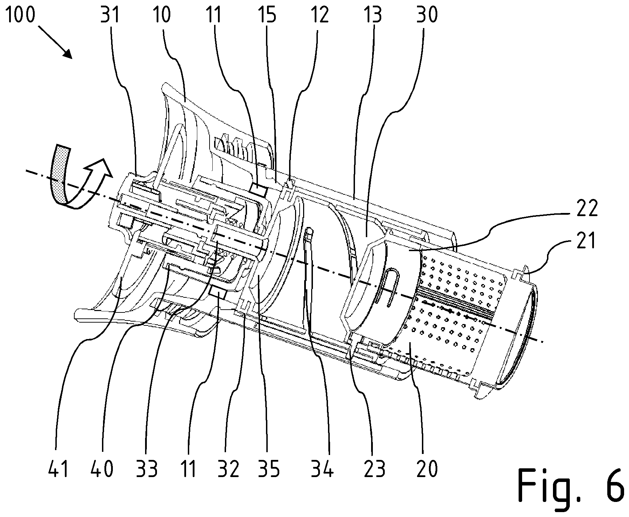

Während in Fig. 5 das Teesiebeinsatzelement 30, der transparente Teesiebeinsatz 20 und die Verschlusseinheit 40 nicht geschnitten dargestellt sind, zeigt Fig. 6 eine vollständige Schnittansicht des Verschlussaufsatzes 100.

Erkennbar ist dort, dass der Dichtring 32 des Auslaufdichtelements 35 an dem Steg 15 im Grundgehäuse 10 anliegt und damit die Auslauföffnungen 11 verschließt. Während des Brühvorgangs kann also keine Flüssigkeit entweichen, beispielsweise, wenn die mit dem Verschlussaufsatz 100 versehene Flasche 50 oder Kanne umfallen sollte. Es kann aber während der Brühzeit auch kein Dampf entweichen, so dass die Temperatur im Inneren der Flasche oder Kanne konstant gehalten werden kann.

Nach Beendigung des Brühvorgangs wird das Teesiebeinsatzelement 30 über den Knauf 31 erneut rotiert. Mit der Rotation wird der Teesiebeinsatz 20 wieder vollständig in den Rohrstutzen 13 zurückgezogen, wobei insbesondere auch die Dichtlippe am Dichtelement 21 wieder an die innere Wandung des Rohrstutzens 13 angelegt wird, so dass damit die Unterseite des Rohrstutzens 13 flüssigkeitsdicht abgeschlossen ist.

Die Öffnung des Auslaufdichtelements 35 und das Absenken des Teesiebeinsatzes 20 erfolgt durch getrennte Bedienelemente 31, 41 und ist daher grundsätzlich unabhängig voneinander möglich. Ist allerdings die Auslauföffnung geschlossen, wenn das Teesiebeinsatzelement 30 rotiert wird, muss aufgrund des anliegenden Auslaufdichtelements 35 ein Reibungswiderstand überwunden werden. Dieser besteht nicht, wenn zuerst der Auslauf geöffnet wird.

Fig. 6 zeigt weiterhin, dass der Teesiebeinsatz 20 ein Oberteil 22 besitzt, an dem die Stifte 23 zur Führung im Bewegungsgewinde 34 angeordnet sind und das steckbar mit dem übrigen Teesiebeinsatz verbunden ist. Der untere Teil des Teesiebeinsatzes 20 kann zur Reinigung oder Befüllung somit leicht vom Oberteil 22 abgezogen werden. Das Oberteil 22, das sich im dauerhaften Eingriff mit dem Bewegungsgewinde 34 befindet, verbleibt unterdessen im Teesiebaufnahmeelement 30.

Bei der dargestellten bevorzugten Ausführungsform eines Verschlussaufsatzes 100 sind die Achse 33 und das Auslaufdichtelement 35 einteilig mit dem Teesiebaufnahmeelement 30 ausgebildet.

## Patentansprüche

1. Verschlussaufsatz (100) für Kannen und Flaschen für Heiß- und Kaltgetränke;
wenigstens umfassend ein Grundgehäuse (10), das mit einem Hals (51) einer Kanne oder eine Flasche (50) zu verbinden ist und das wenigstens eine Auslauföffnung (11) aufweist, welche über eine Verschlusseinheit (40) verschließbar ist,
wobei die Verschlusseinheit (40) zumindest ein bewegliches Auslaufdichtelement (35) umfasst, mittels dessen die wenigstens eine Auslauföffnung (11) abdichtbar ist.
**dadurch gekennzeichnet,**
- **dass** unterhalb des Auslaufdichtelements (35) ein Teesiebaufnahmeelement (30) angeordnet ist, das über ein von der Außenseite des Verschlussaufsatzes (100) zugängliches Bedienelement (31) verdrehbar ist und das ein Bewegungsgewinde (34) aufweist;
- **dass** ein zylindrischer Teesiebeinsatz (20) in einem Aufnahmeraum des Teesiebaufnahmeelements (30) gelagert ist und mit wenigstens einem Eingriffselement (23) in das Bewegungsgewinde (34) eingreift und
- **dass** der Teesiebeinsatz (20) durch Rotation des Teesiebaufnahmeelements (30) axial gegenüber diesem verschiebbar ist;
- **dass** das Grundgehäuse (10) sich unterhalb der Auslauföffnung (11) in einem Rohrstutzen (13) fortsetzt, welcher im Bereich des Dichtelements (35), oberhalb des Teesiebaufnahmeelements (30), wenigstens eine Durchlauföffnung (12) aufweist;
- **dass** das Auslaufdichtelement (35) am Umfang wenigstens einen Dichtring (32) oder eine Dichtlippe aufweist; und/oder dass ein weiteres Dichtelement am Umfang des oberen Bereichs des Teesiebeinsatzes (20) angeordnet ist,
- **dass** der Teesiebeinsatz (20) mit seiner Unterseite aus dem Teesiebaufnahmeelement (30) herausragt und an dem herausragenden Teil ein zur Anlage an den Rohrstutzen (13) vorgesehener Dichtring (21) angeordnet ist,
- **dass** der Teesiebeinsatz (20) durch Rotation des Teesiebaufnahmeelements (30) zwischen
- einer Brühstellung, in der der Teesiebeinsatz (20) mit einem Teil seiner Höhe aus dem Rohrstutzen (13) herausragt, und
- einer Bereitschaftsstellung, in der der die Unterseite des Rohrstutzens (13) durch einen Boden des Teesiebeinsatzes (20) und den Dichtring (21) abgedichtet ist,
axial verschiebbar ist.

2. Verschlussaufsatz (100) nach Anspruch 1, **dadurch gekennzeichnet:**
- **dass** das Auslaufdichtelement (35) mit dem Teesiebaufnahmeelement (30) verbunden ist oder Teil des Teesiebaufnahmeelements (30) ist und
- **dass** das Auslaufdichtelement (35) axial verschiebbar und drehbar in dem Grundgehäuse (10) gelagert und über das Bedienelement (31) rotierbar ist.

3. Verschlussaufsatz (100) nach einem der Ansprüche 1 bis 2, **dadurch gekennzeichnet, dass** der Teesiebeinsatz (20) mitsamt dem Auslaufdichtelement (35) mittels der Verschlusseinheit (40) axial verschiebbar ist, wobei mit der axialen Verschiebung die Durchlauföffnung (12) freigegeben oder verschlossen wird.

4. Verschlussaufsatz (100) nach einem der vorhergehenden Ansprüche,
**dadurch gekennzeichnet, dass** am Grundgehäuse (10) ein die Auslauföffnung (11) umschließender, ringförmiger Steg (15) ausgebildet ist, und dass der Dichtring (35) am Dichtelement (35) anzulegen ist, wobei der Dichtring (35) außerdem eine nach außen überstehende Dichtlippe zur Anlage an die Innenwandung des Rohrstutzens (13) aufweist.

5. Verschlussaufsatz (100) nach einem der vorhergehenden Ansprüche, **dadurch gekennzeichnet, dass** das Bewegungsgewinde als eine den Mantel des Teesiebaufnahmeelement (30) durchbrechende, spiralförmige Führungskulisse ausgebildet ist, in welche wenigstens ein radial vom Teesiebeinsatz (20) nach außen ragendes, stiftförmiges Eingriffselement (23) eingreift.

6. Verschlussaufsatz (100) nach einem der vorhergehenden Ansprüche, **dadurch gekennzeichnet, dass** die Verschlusseinheit (40) als eine Druck-Rast-Einheit zum wechselweisen Anheben und Senken des Dichtelements (35) mittels Betätigung einer Drucktaste (41) ausgebildet ist.

7. Verschlussaufsatz (100) nach einem der vorhergehenden Ansprüche, **dadurch gekennzeichnet, dass** das Bedienelement (31) zur Rotation des Teesiebaufnahmeelements (30) auf der Drucktaste (41) angeordnet ist und über eine in der Länge veränderbare Verbindung mit einer Achse (33), die durch die Verschlusseinheit (40) hindurchgeführt ist, mit dem Teesiebaufnahmeelement (30) gekoppelt ist.

8. Isolierflasche, wenigstens umfassend einen doppelwandigen Behälter (50) und einen Verschlussaufsatz (100) nach einem der vorhergehenden Ansprüche.

## Claims

1. Closure cap (100) for cans and bottles for hot and cold drinks;
at least comprising a base housing (10) which can be connected to a neck (51) of a can or a bottle (50) and which comprises at least one outlet opening (11) which can be closed by a closure unit (40),
the closure unit (40) comprising at least one moveable outlet sealing element (35) which can seal the at least one outlet opening (11),
**characterised in that**
- a tea filter receiving element (30) is arranged below the outlet sealing element (35) and can be rotated by means of a control element (31) which is accessible from the outer side of the closure cap (100) and which comprises a movement thread (34);
- a cylindrical tea filter attachment (20) is mounted in a receiving chamber of the tea filter receiving element (30) and engages in the movement thread (34) by means of at least one engagement element (23) and
- the tea filter attachment (20) can be moved axially in relation to the tea filter receiving element (30) by the rotating of said latter element;
- the base housing (10) continues below the outlet opening (11) in a nozzle (13), which has at least one through-flow opening (12) in the region of the sealing element (35), above the tea filter receiving element (30);
- the outlet sealing element (35) has at least one sealing ring (32) or one sealing lip on the circumference; and/or a further sealing element is arranged on the circumference of the upper region of the tea filter attachment (20),
- the tea filter attachment (20) protrudes with its underside from the tea filter receiving element (30) and a sealing ring (21) provided to lie against the nozzle (13) is arranged on the protruding part,
- the tea filter attachment (20) is axially displaceable through rotation of the tea filter receiving element (30) between
- a brewing position, in which the tea filter attachment (20) protrudes with a part of its height from the nozzle (13), and
- a stand-by position, in which the underside of the nozzle (13) is sealed by a floor of the tea filter attachment (20) and the sealing ring (21).

2. Closure cap (100) according to claim 1, **characterised in that**:
- the outlet sealing element (35) is connected to the tea filter receiving element (30) or is part of the tea filter receiving element (30) and
- the outlet sealing element (35) is mounted in an axially displaceable and rotatable manner in the base housing (10) and can be rotated by way of the control element (31).

3. Closure cap (100) according to any of claims 1 to 2, **characterised in that** the tea filter attachment (20) is axially displaceable together with the outlet sealing element (35) by means of the closure unit (40), whereby the through-flow opening (12) is released or closed with the axial displacement.

4. Closure cap (100) according to any of the preceding claims, **characterised in that** an annular ridge (15) surrounding the outlet opening (11) is formed on the base housing (10) and that the sealing ring (35) is to be placed on the sealing element (35), whereby the sealing ring (35) has moreover an outwardly projecting sealing lip for lying against the inside wall of the nozzle (13).

5. Closure cap (100) according to any of the preceding claims, **characterised in that** the movement thread is formed as a spiral guide breaking through the casing of the tea filter receiving element (30), into which guide at least one pin-shaped engagement element (23) protruding radially outwards from the tea filter attachment (20) engages.

6. Closure cap (100) according to any of the preceding claims, **characterised in that** the closure unit (40) is formed as a pressure-and-rest unit for alternate raising and lowering of the sealing element (35) by means of operation of a push-button (41).

7. Closure cap (100) according to any of the preceding claims, **characterised in that** the control element (31) for rotation of the tea filter receiving element (30) is arranged on the push-button (41) and is coupled to the tea filter receiving element (30) via a variable-length connection with an axis (33) that is passed through the closure unit (40).

8. Insulated bottle, at least comprising a double-walled container (50) and a closure cap (100) according to any of the preceding claims.

## Revendications

1. Embout de fermeture (100) pour canettes et bouteilles de boissons chaudes et froides;
comprenant au moins un boîtier de base (10) qui doit être connecté à un goulot (51) d'une canette ou d'une bouteille (50) et qui présente au moins une ouverture de sortie (11), qui peut être fermée par une unité de fermeture (40),
dans lequel l'unité de fermeture (40) comprend au moins un élément d'étanchéité de sortie mobile (35), au moyen duquel l'au moins une ouverture de sortie (11) peut être étanchéifiée,
**caractérisé en ce**
- **qu'**un élément de logement de filtre à thé (30) est disposé sous l'élément d'étanchéité de sortie (35), qui peut être tourné au moyen d'un élément de commande (31) accessible depuis le côté extérieur de l'embout de fermeture (100) et présente un filetage de déplacement (34); - qu'un insert de filtre à thé cylindrique (20) est monté dans un espace de logement de l'élément de logement de filtre à thé (30) et s'engage dans le filetage de déplacement (34) avec au moins un élément d'engagement (23), et
- **que** l'insert de filtré à thé (20) peut être déplacé axialement par rotation de l'élément de logement de filtre à thé (30) par rapport à celui-ci;
- **que** le boîtier de base (10) se prolonge sous l'ouverture de sortie (11) par une tubulure (13), qui présente au moins une ouverture de passage (12) au niveau de l'élément d'étanchéité (35), au-dessus de l'élément de logement de filtre à thé (30);
- **que** l'élément d'étanchéité de sortie (35) présente sur la périphérie au moins une bague d'étanchéité (32) ou une lèvre d'étanchéité; et/ou en ce qu'un autre élément d'étanchéité est disposé sur la périphérie de la zone supérieure de l'insert de filtré à thé (20),
- **que** l'insert de filtre à thé (20) fait saillie avec son côté inférieur hors de l'élément de logement de filtre à thé (30) et qu'une bague d'étanchéité (21) prévue pour application sur la tubulure (13) est disposée sur la partie saillante,
- **que** l'insert de filtré à thé (20) peut être déplacé axialement par rotation de l'élément de logement de filtre à thé (30) entre
- une position d'infusion dans laquelle l'insert de filtre à thé (20) fait saillie avec une partie de sa hauteur hors de la tubulure (13), et
- une position d'attente dans laquelle le côté inférieur de la tubulure (13) est étanchéifié par un fond de l'insert de filtre à thé (20) et la bague d'étanchéité (21).

2. Embout de fermeture (100) selon la revendication 1, **caractérisé en ce**
- **que** l'élément d'étanchéité de sortie (35) est connecté à l'élément de logement de filtre à thé (30) ou fait partie de l'élément de logement de filtre à thé (30) et
- **que** l'élément d'étanchéité de sortie (35) est monté dans le boîtier de base (10) de manière déplaçable axialement et de manière rotative par l'intermédiaire de l'élément de commande (31).

3. Embout de fermeture (100) selon l'une quelconque des revendications 1 à 2, **caractérisé en ce que** l'insert de filtre à thé (20) avec l'élément d'étanchéité de sortie (35) est déplaçable axialement au moyen de l'unité de fermeture (40), dans lequel l'ouverture de passage (12) est ouverte ou fermée lors du déplacement axial.

4. Embout de fermeture (100) selon l'une quelconque des revendications précédentes, **caractérisé en ce qu'**une nervure annulaire (15) entourant l'ouverture de sortie (11) est formée sur le boîtier de base (10), et **en ce que** la bague d'étanchéité (35) doit être appliquée sur l'élément d'étanchéité (35), dans lequel la bague d'étanchéité (35) présente également une lèvre d'étanchéité faisant saillie vers l'extérieur pour application sur la paroi intérieure de la tubulure (13).

5. Embout de fermeture (100) selon l'une quelconque des revendications précédentes, **caractérisé en ce que** le filetage de déplacement est conçu comme une coulisse de guidage en spirale traversant la gaine de l'élément de logement de filtre à thé (30), dans laquelle au moins un élément d'engagement (23) en forme de tige faisant saillie radialement vers l'extérieur de l'insert de filtre à thé (20) s'engage.

6. Embout de fermeture (100) selon l'une quelconque des revendications précédentes, **caractérisé en ce que** l'unité de fermeture (40) est conçue comme une unité de verrouillage à pression pour lever et abaisser alternativement l'élément d'étanchéité (35) au moyen de l'actionnement d'un bouton-poussoir (41).

7. Embout de fermeture (100) selon l'une quelconque des revendications précédentes, **caractérisé en ce que** l'élément de commande (31) pour la rotation de l'élément de logement de filtre à thé (30) est disposé sur le bouton-poussoir (41) et est couplé à l'élément de logement de filtre à thé (30) par l'intermédiaire d'une connexion de longueur variable avec un axe (33) qui passe à travers l'unité de fermeture (40).

8. Bouteille isolante, comprenant au moins un récipient à double paroi (50) et une unité de fermeture (100) selon l'une quelconque des revendications précédentes.
